# EUROPEAN PATENT APPLICATION

(11) **EP 4 261 979 A2**
(43) Date of publication of application: **18.10.2023**
(21) Application number: 22206828.0
(22) Date of filing: 11.11.2022
(51) Int. Cl.: H01M 10/42, H01M 10/54, H01M 10/6554, H01M 10/6556, H01M 50/204, H01M 50/209, H01M 50/244, H01M 50/258, H01M 50/262, H01M 50/264, H01M 50/271

(54) **BATTERY PACK AND METHOD FOR DISASSEMBLING BATTERY PACK**

(30) Priority: 11.04.2022 CN 202210376228
(71) Applicant: CALB Co., Ltd., Changzhou City, Jiangsu Province (CN)
(72) Inventor: WANG, Shuaifeng, Changzhou City, Jiangsu Province (CN); YANG, Pei, Changzhou City, Jiangsu Province (CN); GUAN, Junshan, Changzhou City, Jiangsu Provice (CN); GU, Liangjie, Changzhou City, Jiangsu Provice (CN); ZHAO, Dong, Changzhou City, Jiangsu Province (CN); JIANG, Xinwei, Changzhou City, Jiangsu Province (CN)
(74) Representative: Becker, Eberhard

(57) **Abstract**

A battery pack and a method for disassembling the battery pack are provided. The battery pack includes a battery box (10), a first connector (20), a first battery (30), and a second battery (40). The first connector (20) is detachably disposed in the battery box (10). The first battery (30) is fixed on the first connector (20) to be arranged in the battery box (10) through the first connector (20). The second battery (40) is arranged in the battery box (10). The first connector (20) is not fixedly connected to the second battery (40) to prevent the second battery (40) from blocking the first battery (30) and the first connector (20) from being simultaneously detached from the battery box (10).

## Description

### BACKGROUND

### Technical Field

The present disclosure relates to the technical field of batteries, and in particular, to a battery pack and a method for disassembling the battery pack.

### Description of Related Art

In the related art, there are multiple batteries configured in the battery pack. After the battery pack is used for a long time, some batteries in the battery pack might not operate properly, so they need to be maintained. In the maintenance process, all batteries need to be taken out, which affects the maintenance efficiency of the battery pack.

### SUMMARY

The present disclosure provides a battery pack and a method for disassembling the battery pack.

According to a first aspect of the present disclosure, a battery pack is provided. The battery pack includes a battery box, a first connector, a first battery, and a second battery. The first connector is detachably disposed in the battery box. The first battery is fixed on the first connector to be arranged in the battery box through the first connector. The second battery is arranged in the battery box. The first connector is not fixedly connected to the second battery to prevent the second battery from blocking the first battery and the first connector from being simultaneously removed from the battery box.

According to a second aspect of the present disclosure, a method for disassembling a battery pack is provided. The method includes following steps. Disconnecting a first connector from a battery box, and detaching the first connector from the battery box, wherein a first battery is detached simultaneously with the first connector, and a second battery is retained in the battery box.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is an exploded schematic view of a battery pack according to a first exemplary embodiment.
FIG. 2 is an exploded schematic view of a battery pack according to a second exemplary embodiment.
FIG. 3 is an assembled schematic view of the battery pack according to the second exemplary embodiment.
FIG. 4 is an exploded schematic view of a battery pack according to a third exemplary embodiment.
FIG. 5 is a schematic view of a partial structure of a battery pack according to a fourth exemplary embodiment.
FIG. 6 is a schematic flowchart of a method for disassembling a battery pack according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

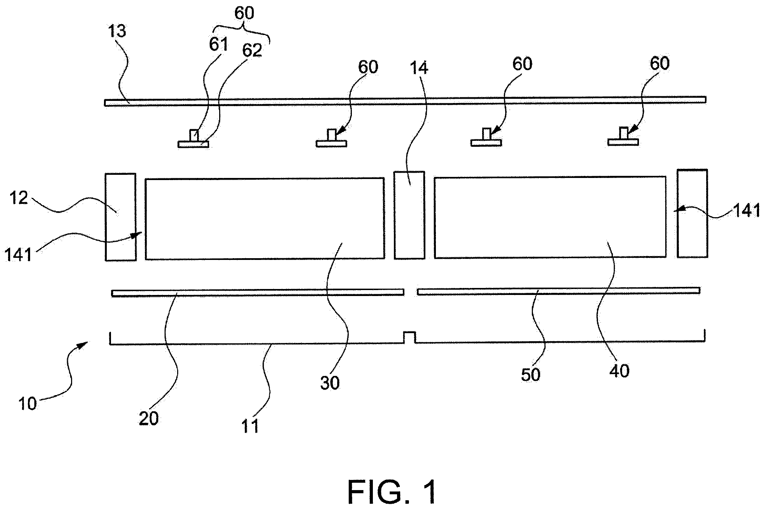

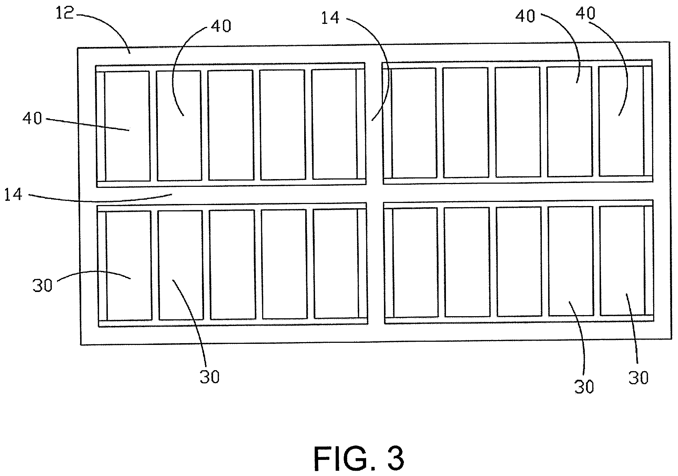

An embodiment of the present disclosure provides a battery pack, please refer to FIG. 1 to FIG. 4, the battery pack includes a battery box 10, a first connector 20, a first battery 30, and a second battery 40. The first connector 20 is detachably arranged in the battery box 10. The first battery 30 is fixed on the first connector 20, so as to be arranged in the battery box 10 through the first connector 20. The second battery 40 is arranged in the battery box 10, and the first connector 20 is not fixedly connected to the second battery 40 to prevent the second battery 40 from blocking the first battery 30 and the first connector 20 from being simultaneously detached from the battery box 10.

The battery pack in an embodiment of the present disclosure includes the battery box 10, the first connector 20, the first battery 30, and the second battery 40. Both the first battery 30 and the second battery 40 are provided on the battery box 10. By the configuration that the first battery 30 is fixed on the first connector 20, the first connector 20 is detachably arranged on the battery box 10, and the second battery 40 is not fixedly connected to the first connector 20, the first battery 30 and the first connector 20 may be simultaneously detached from the battery box 10 without affecting the second battery 40, so as to facilitate the maintenance of the battery pack, thereby improving the performance of the battery pack.

It should be noted that, the first battery 30 is fixed on the first connector 20, and the first connector 20 is detachably arranged in the battery box 10, so as to ensure that the first battery 30 is stably arranged in the battery box 10. It is possible to prevent the first battery 30 from shaking during normal use. When the first battery 30 is subjected to a maintenance process, the connection between the first connector 20 and the battery box 10 may be released, so that the first connector 20 may be detached from the battery box 10, and that the first battery 30 may be taken out from the battery box 10, and subsequent maintenance may be performed. For example, the first battery 30 on the first connector 20 is detached\ and is replaced with a new first battery 30 to be arranged on the original first connector 20. Subsequently, the first battery 30 and the first connector 20 are arranged on the battery box 10. Alternatively, the first battery 30 and the first connector 20 are directly replaced with new first battery 30 and new first connector 20, which are then arranged on the battery box 10.

Neither the first battery 30 nor the first connector 20 may be fixedly connected to the second battery 40, so that when the first battery 30 and the first connector 20 are detached from the battery box 10, the second battery 40 will not obstruct the first battery 30 and the first connector 20. In this manner, it is possible to ensure independent detachment of the first battery 30 and the first connector 20, without affecting the second battery 40.

A battery includes a cell and an electrolyte, and is the smallest unit capable of performing electrochemical reactions such as charge/discharge. The cell refers to a unit formed by winding or laminating a stack portion, and the stack portion includes a first electrode, a separator and a second electrode. When the first electrode is a positive electrode, the second electrode is a negative electrode. The polarities of the first electrode and the second electrode may be interchanged.

It should be noted that neither the first battery 30 nor the first connector 20 is fixedly connected to the second battery 40, and the second battery 40 may be stably arranged in the battery box 10. Under the circumstances, the second battery 40 may be directly fixed on the battery box 10. Alternatively, the second battery 40 may be fixed on the battery box 10 through other components, the disclosure provides no limitation thereto.

In an embodiment, the first battery 30 is adhesively connected to the first connector 20, so as to ensure that the first battery 30 is stably connected to the first connector 20, and to avoid problem such as shaking of the first battery 30, thereby improving the safety performance of the first battery 30. The first battery 30 and the first connector 20 may be bonded by a thermally conductive structural adhesive, which not only may ensure the strength of the connection, but also may realize heat transfer by the thermally conductive structural adhesive, thereby improving the heat dissipation capability of the first battery 30.

In some embodiments, it is not excluded that the first battery 30 and the first connector 20 may be connected through engagement connection, for example.

In an embodiment, there are a plurality of first batteries 30, and the plurality of first batteries 30 are all fixed on the first connector 20, so that when the first connector 20 is detached from the battery box 10, the multiple first batteries 30 may be simultaneously detached from the battery box 10 along with the first connector 20.

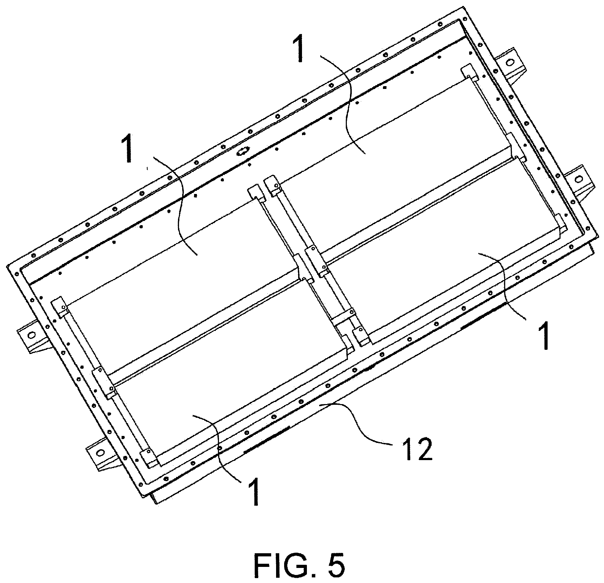

The plurality of first batteries 30 may form a battery module 1 and then be fixed on the first connector 20, and specifically, the plurality of first batteries 30 may be fixed through end plates and lateral plates to form the battery module 1, and finally arranged in the battery box 10, as shown in FIG 5. The plurality of first batteries 30 may be independently fixed on the first connector 20, that is, there is no need to group the plurality of first batteries 30. Under the circumstances, the end plate and the lateral plate may be removed.

In an embodiment, as shown in FIG. 1, FIG. 2 and FIG. 4, the battery pack further includes a second connector 50, and the second connector 50 is detachably arranged in the battery box 10. The second battery 40 is fixed on the second connector 50 to be arranged in the battery box 10 through the second connector 50. The first battery 30 is not fixedly connected to the second connector 50, so as to prevent the first battery 30 from blocking the second battery 40 and the second connector 50 from being simultaneously detached from the battery box 10. In this manner, when the second battery 40 and the second connector 50 are simultaneously detached from the battery box 10, the detachment will not affect the first battery 30, so as to facilitate the maintenance of the battery pack.

The first battery 30 may be detachably arranged on the battery box 10 through the first connector 20, and the second battery 40 may be detachably arranged on the battery box 10 through the second connector 50. In this manner, the first battery 30 or the second battery 40 may be independently detached from the battery box 10 according to maintenance requirements, thereby improving maintenance efficiency.

In an embodiment, the second battery 40 is adhesively connected to the second connector 50, such that that the second battery 40 is ensured to be stably connected to the second connector 50, and problem such as shaking of the second battery 40 is avoided, thereby improving the safety performance of the second battery 40. The second battery 40 and the second connector 50 may be bonded through the thermally conductive structural adhesive, which not only may ensure the strength of the connection, but also may realize heat transfer through the thermally conductive structural adhesive, thereby improving the heat dissipation capability of the second battery 40.

In some embodiments, it is not excluded that the second battery 40 and the second connector 50 may be connected through engagement connection, for example.

In an embodiment, there are a plurality of second batteries 40, and the plurality of second batteries 40 are all fixed on the second connector 50, so that when the second connector 50 is detached from the battery box 10, the plurality of second batteries 40 may be simultaneously detached from the battery box 10 along with the second connector 50.

The plurality of second batteries 40 may from a battery module and then be fixed on the second connector 50, and specifically, the plurality of second batteries 40 may be fixed through end plates and lateral plates to form the battery module. The plurality of second batteries 40 may be independently fixed on the second connector 50, that is, there is no need to group the plurality of second batteries 40. Under the circumstances, the end plate and the lateral plate may be removed.

It should be noted that the first battery 30 and the second battery 40 may be the same type of batteries. In some embodiments, it is not excluded that the first battery 30 and the second battery 40 may be different types of batteries, the disclosure is not limited thereto. The plurality of first batteries 30 may be connected in series or in parallel, and the plurality of second batteries 40 may be connected in series or in parallel. For example, the plurality of first batteries 30 form a first module, and the plurality of second batteries 40 form a second module, and the first module and the second module may also be electrically connected. When the first battery 30 or the second battery 40 is in independent detachment, the connection relationship between the first module and the second module may be disconnected, so as to ensure that the first battery 30 and the second battery 40 do not affect each other.

Even if there is a connection relationship between the first battery 30 and the second battery 40, for example, the first battery 30 and the second battery 40 are connected through the bus bar, because there is no connection relationship between the second battery 40 and the first connector 20, and there is no connection relationship between the second battery 40 and the second connector 50, when the first battery 30 and the second battery 40 are independently detached, it is only necessary to disconnect the connection relationship between the first battery 30 and the second battery 40, the first battery 30 can be detached along with the first connector 20, or the second battery 40 is detached along with the second connector 50. In this manner, the overall structure of the battery pack may not be damaged.

In some embodiments, the first connector 20 and the second connector 50 may be connected, but the first connector 20 and the second connector 50 are detachably connected, the first connector 20 and the second connector 50 may be directly connected, or the first connector 20 and the second connector 50 may be indirectly connected.

In some embodiments, the first connector 20 and the second connector 50 are arranged at intervals, so that when the first connector 20 and the second connector 50 are in independent detachment, it is possible to omit the detachment of the direct connection relationship between the first connector 20 and the second connector 50. In this way, the connection strength between the first connector 20 or the second connector 50 and the battery box 10 may not be affected.

In an embodiment, the first connector 20 includes a circulating flow channel, and the circulating flow channel may be provided with a heat exchange medium, such as a liquid heat exchange medium, a gas exchange medium or a phase change material, etc., so that the heat transfer performance of the first connector 20 may be improved, so as to realize cooling or preheating of the first battery 30.

In an embodiment, the second connector 50 includes a circulating flow channel, and the circulating flow channel may be provided with a heat exchange medium, such as a liquid heat exchange medium, a gas exchange medium or a phase change material, etc., so that the heat transfer performance of the second connector 50 may be improved, so as to realize cooling or preheating of the second battery 40.

It should be noted that the first connector 20 and the second connector 50 form a temperature adjustment mechanism of the battery pack, so as to realize the temperature adjustment of the batteries inside the battery pack, thereby ensuring the use performance of the battery pack. The first connector 20 may be a plate-like structure, the second connector 50 may be a plate-like structure, and the plate-like structure may include upper and lower plates stacked together, so as to form a circulating flow channel between the two plates. The specific structural form of the plate-like structure and the specific structural form of the circulating flow channel are not limited in the disclosure, and may be selected according to actual needs.

In an embodiment, as shown in FIG. 1, the battery box 10 includes a bottom plate 11 and a frame 12. The frame 12 is arranged around the bottom plate 11. The first connector 20 is arranged in the frame 12, and at least one of the bottom plate 11 and the frame 12 is connected to the first connector 20, so as to ensure that the first connector 20 is stably arranged in the battery box 10. At least one of the bottom plate 11 and the frame 12 is detachably connected to the first connector 20, that is, the bottom plate 11 is detachably connected to the first connector 20, and/or the frame 12 is detachably connected to the first connector 20. In this manner, it is also possible to ensure that the first connector 20 may be detached from the battery box 10.

In an embodiment, the second battery 40 is disposed on the battery box 10 through the second connector 50, and at least one of the bottom plate 11 and the frame 12 is detachably connected to the second connector 50.

It should be noted that the arrangement of the frame 12 around the bottom plate 11 does not mean a specific configuration, and the key point is to explain that the frame 12 forms a circumferentially closed space. The frame 12 is connected to the bottom plate 11, and the frame 12 may be disposed on the bottom plate 11, or the frame 12 may be connected to the circumferential edge of the bottom plate 11, the disclosure is not limited thereto.

The bottom plate 11 and the frame 12 form an accommodating space, the first connector 20 is arranged in the accommodating space, the second connector 50 is arranged in the accommodating space, that is, the first battery 30 and the second battery 40 are arranged in the accommodating space. The first connector 20 and the second connector 50 may be detached from the bottom plate 11 and the frame 12 independently. For example, the first connector 20 and the second connector 50 may be taken out from the top portion of the frame 12, or the first connector 20 and the second connector 50 may be taken out from the bottom portion of the frame 12.

In an embodiment, the frame 12 is detachably connected to the bottom plate 11, and the frame 12 is detachably connected to the first connector 20. That is, during the detachment process of the first connector 20, if the first connector 20 is taken out from the bottom portion of the frame 12, it is necessary to first detach the bottom plate 11 from the frame 12, and then complete the detachment of the first connector 20, so as to realize the separate removal of the first battery 30.

The frame 12 and the bottom plate 11 may be engaged with each other, the frame 12 and the bottom plate 11 may be connected through one or more fasteners, such as bolts, and the frame 12 and the bottom plate 11 may be riveted through one or more rotary tapping screws, the disclosure is not limited thereto as long as the connection strength is ensured and the detachment is simple.

The frame 12 and the first connector 20 may be connected through engagement connection, and the frame 12 and the first connector 20 may be connected through one or more fasteners, such as bolts, and the frame 12 and the first connector 20 may be riveted through one or more rotary tapping screws, the disclosure is not limited thereto as long as the connection strength is ensured and the disassembly is simple.

In an embodiment, as shown in FIG. 1, the first connector 20 is located between the frame 12 and the bottom plate 11, so that the frame 12 and the bottom plate 11 may reliably clamp the first connector 20 to ensure the stability of the first connector 20. After the bottom plate 11 is separated from the frame 12, the first connector 20 may be exposed, so that the first connector 20 may be removed from the bottom portion of the frame 12, so as to facilitate maintenance of the first battery 30 in an independent manner.

In an embodiment, as shown in FIG. 1, the battery box 10 further includes a top cover 13. The top cover 13 is disposed on the frame 12, and the top cover 13 is detachably connected to the first battery 30. In this manner, in normal use of the battery pack, the top cover 13 may realize fixing of the first battery 30, and when the first battery 30 needs to be detached, the top cover 13 may release the first battery 30.

The top cover 13 and the bottom plate 11 are connected to the top portion and the bottom portion of the frame 12, respectively, so that the battery box 10 has a closed accommodating space, so that the battery inside the battery box 10 may be protected.

It should be noted that the top cover 13 may be connected to the second battery 40, and when the first battery 30 is detached, the top cover 13 may be disconnected from the first battery 30. If the first battery 30 is removed from the bottom portion of the frame 12, the connection between the top cover 13 and the second battery 40 may not be released. If the first battery 30 is removed from the top portion of the frame 12, the connection between the top cover 13 and the second battery 40 may be released, and the top cover 13 may be removed. In some embodiments, it is not excluded that the top cover 13 may be provided in plurality, and one top cover may correspond to the first battery 30 while another top cover may correspond to the second battery 40.

In some embodiments, the top cover 13 and the first battery 30 may be directly connected, for example, the top cover 13 and the first battery 30 may be connected through engagement connection.

In an embodiment, as shown in FIG. 1, the battery pack further includes a connecting component 60, and the top cover 13 and the first battery 30 are connected through the connecting component 60, which not only ensures the stability of the connection between the top cover 13 and the first battery 30, but also makes it easy to release the connection between the top cover 13 and the first battery 30.

The connecting component 60 may include screws, bolts, keys and other structures. For example, the connecting component 60 includes bolts, and the first battery 30 may be provided with threaded holes, so that the bolts may be fit into the threaded holes after passing through the top cover 13. The first battery 30 may have threaded holes on its casing structure, or, the first battery 30 may be provided with a protruding structure at outside, and the protruding structure may be provided with threaded holes.

In an embodiment, the top cover 13 is detachably connected to at least a part of the connecting component 60, and the first battery 30 is fixedly connected to at least a part of the connecting component 60, so that when the first battery 30 is disassembled, the connecting component 60 releases the connection with the top cover 13 and at least a portion of the connecting component 60 may be removed along with the first battery 30.

In some embodiments, the connecting component 60 may include a first engaging portion and a second engaging portion. The first engaging portion is fixed on the top cover 13, the second engaging portion is fixed on the first battery 30, and the first engaging portion is engaged with the second engaging portion. When the first battery 30 is in detachment, the engagement connection between the first engaging portion and the second engaging portion may be released, so that the first engaging portion remains on the top cover 13, and the second engaging portion is removed along with the first battery 30.

In an embodiment, the bonding of the connecting component 60 and the first battery 30 not only may ensure the stability of the connection between the connecting component 60 and the first battery 30, but also enable at least a part of the connecting component 60 to be detached along with the first battery 30. The connecting component 60 and the first battery 30 may be bonded through structural adhesive, and further, the connecting component 60 and the first battery 30 may be bonded through thermally conductive structural adhesive, which not only may ensure the strength of connection, but also the thermally conductive structural adhesive may realize thermal transfer, so as to improve the heat dissipation capability of the first battery 30.

In some embodiments, it is not excluded that the connecting component 60 and the first battery 30 are detachably connected. For example, an adhesive layer with relatively weak bonding strength is used between the connecting component 60 and the first battery 30. In this manner, after the connecting component 60 is simultaneously detached along with the first battery 30, the connecting component 60 may be detached from the first battery 30, so as to *repair or replace the first* battery 30.

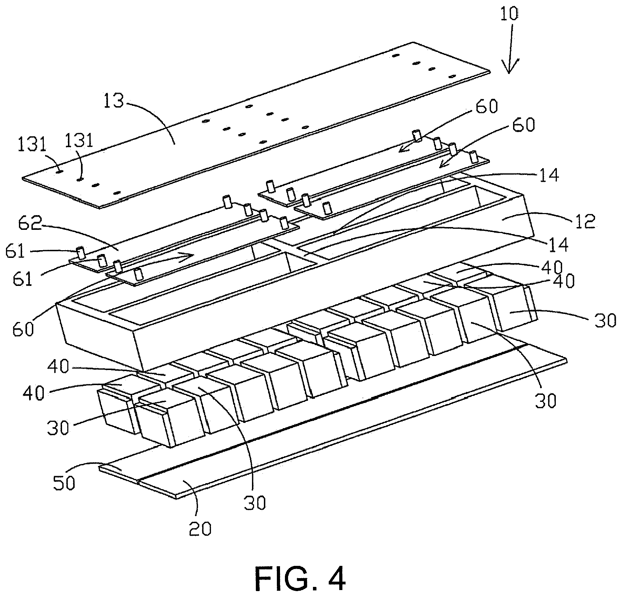

In an embodiment, as shown in FIG. 1 and FIG. 4, the connecting component 60 includes a fixing member 61 and reinforcement member 62. The fixing member 61 is detachably connected to the top cover 13. The reinforcing member 62 is connected to one end of the fixing member 61 facing the first battery 30. The reinforcing member 62 is adhesively connected to the first battery 30, which not only may ensure the connection strength between the reinforcing member 62 and the first battery 30, but also may realize reliable protection for the first battery 30 and increase the stability of the first battery 30. Therefore, when the first battery 30 is detached, the connection between the fixing member 61 and the top cover 13 may be released.

The fixing member 61 may be a bolt, and the connecting component 60 may further include a nut. The bolt passes through the top cover 13 and is then fixed by the nut. When the first battery 30 is detached, the nut may be removed from the bolt, so that the connection between the first battery 30 and the top cover 13 is released. The fixing member 61 may also be a protruding structure, and the protruding structure is inserted into the top cover 13 to realize the connection between the two. When disassembling the first battery 30, the first battery 30 may drive the protruding structure to detach from the top cover 13.

In some embodiments, the reinforcing member 62 may be connected to the plurality of first batteries 30 simultaneously, and as shown in FIG. 4, the reinforcing member 62 may be a plate body, and the plate body is simultaneously connected to the plurality of first batteries 30, and the plurality of fixing members 61 may be provided on the reinforcing member 62. The top cover 13 may be provided with a plurality of configuration holes 131, and the fixing member 61 may respectively pass through the configuration holes 131.

In some embodiments, the reinforcing member 62 may be connected to one first battery 30, and one reinforcing member 62 corresponds to one fixing member 61.

In an embodiment, the connecting component 60 may be provided in plurality.

In an embodiment, as shown in FIG. 1 to FIG. 4, the battery box 10 further includes a partition beam 14. The partition beam 14 is arranged in the frame 12, and the first battery 30 and the second battery 40 are located on both sides of the partition beam 14 respectively. One partition beam 14 may divide the accommodating space enclosed by the frame 12 into two sub-accommodating spaces, and the first battery 30 and the second battery 40 may be located in the two sub-accommodating spaces respectively. In this manner, when the battery is in detachment, the first battery 30 or the second battery 40 in one sub-accommodating space may be removed independently.

In some embodiments, when the battery box 10 includes a partition beam 14, the battery box 10 is formed with two sub-accommodating spaces 141. The first battery 30 and the second battery 40 are respectively arranged in the two sub-accommodating spaces 141, and the first connector 20 and the second connector 50 are respectively disposed in the two sub-accommodating spaces 141. Correspondingly, a plurality of first batteries 30 and a plurality of second batteries 40 are respectively disposed in the two sub-accommodating spaces 141. The first connector 20 may simultaneously detach the plurality of first batteries 30 from one sub-accommodating space 141, and the second connector 50 may simultaneously detach the plurality of second batteries 40 from another sub-accommodating space 141. Each sub-accommodating space 141 may correspond to at least one connecting component 60.

In some embodiments, the battery box 10 may include at least two partition beams 14. For example, the two partition beams 14 may be arranged in an intersecting manner, so that four sub-accommodating spaces 141 may be formed. Under the circumstances, the battery box 10 may further include a plurality of third batteries and a plurality of fourth batteries, correspondingly, the third batteries and the fourth batteries may be arranged in the battery box 10 through the third connector and the fourth connector, respectively.

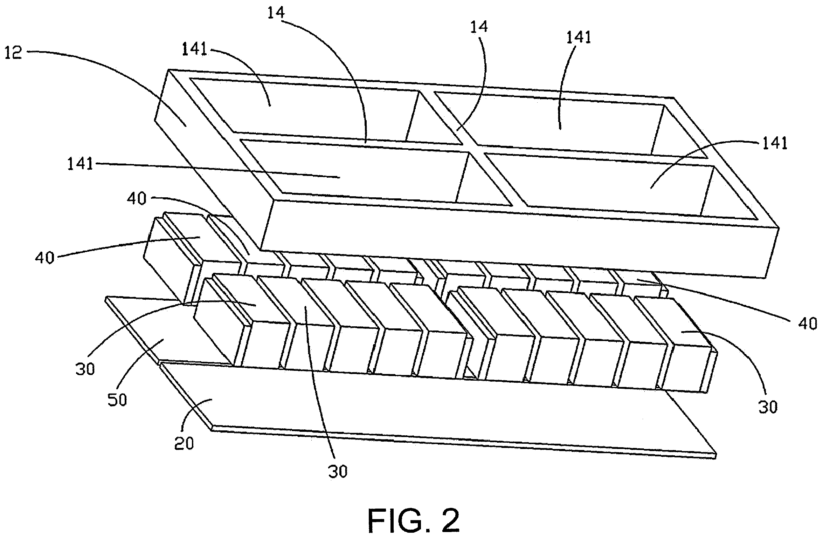

Referring to FIG. 2 to FIG. 4 in combination, the battery box 10 may include at least two partition beams 14. For example, the two partition beams 14 may be arranged in an intersecting manner, so that four sub-accommodating spaces 141 may be formed. Under the circumstances, two adjacent sub-accommodating spaces 141 are both provided with the first battery 30 therein, and another two adjacent sub-accommodating spaces 141 are both provided with the second battery 40 therein. The first connector 20 may correspond to the first battery 30 in the two sub-accommodating spaces 141, and the second connector 50 may correspond to the second battery 40 in the two sub-accommodating spaces 141.

In an embodiment, the first connector 20 is located between the partition beam 14 and the bottom plate 11, so that the partition beam 14 and the bottom plate 11 can reliably clamp the first connector 20, thereby ensuring the stability of the first connector 20. After the bottom plate 11 is detached from the frame 12, the first connector 20 may be exposed, so that the first connector 20 may be detached from the frame 12, so as to facilitate maintenance of the first battery 30 in an independent manner.

The partition beam 14 and the bottom plate 11 may be engaged with each other, the partition beam 14 and the bottom plate 11 may be connected by one or more fasteners, such as bolts, and the partition beam 14 and the bottom plate 11 may be riveted by one or more rotary tapping screws, the disclosure is not limited thereto as long as the connection strength is ensured and the disassembly is simple.

The partition beam 14 and the first connector 20 may be engaged with each other, the partition beam 14 and the first connector 20 may be connected through one or more fasteners, such as bolts, and the partition beam 14 and the first connector 20 may be riveted through one or more rotary tapping screws. The partition beam 14 and the first connector 20 may only abut against each other, the disclosure is not limited thereto as long as the connection strength is ensured and the disassembly is simple.

In an embodiment, as shown in FIG. 1, the first connector 20 and the second connector 50 may be located below the partition beam 14 and the frame 12 and above the bottom plate 11, so that the first connector 20 and the second connector 50 may be stably arranged in the battery box 10 to ensure the stability of the first battery 30 and the second battery 40. When the first battery 30 or the second battery 40 is in independent detachment, the connection between the bottom plate 11 and the frame 12 and the bottom plate 11 and the partition beam 14 may be released. Under the circumstances, the first connector 20 and the second connector 50 may be exposed, so that the connection between the first connector 20 and the frame 12 is released, and the connection between the first connector 20 and the partition beam 14 is released, and the first connector 20 and the first battery may be disassembled simultaneously. Or, the connection between the second connector 50 and the frame 12 may be released, and the connection between the second connector 50 and the partition beam 14 may be released, so that the second connector 50 and the second battery 40 may be disassembled simultaneously.

In some embodiments, it is not excluded that there may be at least two bottom plates 11, and the independent bottom plates 11 may correspond to the first connector 20 and the second connector 50 respectively. As shown in FIG. 1, the bottom plate 11 is an integral structure, which is not only simple in structure, but also ensures the sealing performance.

It should be noted that the second battery 40 is disposed on the battery box 10 through the second connector 50, and the connection method and setting method of the second connector 50 may be derived from the connection method and setting method of the first connector 20, which will not be repeated here.

In an embodiment, as shown in FIG. 2 to FIG. 4, the battery pack includes a first connector 20 and a second connector 50, the first battery 30 is arranged on the first connector 20, and the second battery 40 is arranged on the second connector 50. The battery box 10 includes the frame 12 and the top cover 13, the first connector 20 is connected to the bottom portion of the frame 12, the second connector 50 is connected to the bottom portion of the frame 12, and the top cover 13 is arranged on the top portion of the frame 12 to form a space for accommodating the battery.

Compared with the battery pack in the above embodiment, the bottom plate 11 is removed from the battery pack in this embodiment, that is, the first connector 20 and the second connector 50 realize the protection for the bottom portion of the battery box 10, and the independent detachment of the battery is also convenient.

In an embodiment, as shown in FIG. 2 to FIG. 4, the battery box 10 further includes a partition beam 14, the partition beam 14 is arranged in the frame 12, and the first battery 30 and the second battery 40 are respectively located on both sides of the partition beam 14. The first connector 20 and the second connector 50 are connected to the bottom portion of the partition beam 14, and the first connector 20 and the second connector 50 realize the protection for the bottom portion of the battery box 10.

It should be noted that other structures of the battery pack in FIG. 2 to FIG. 4 may be the same as those of the battery pack in FIG. 1, which will not be repeated here. The difference is that, in the battery pack of FIG. 2 to FIG. 4, the bottom plate 11 in FIG. 1 may be removed. Of course, the battery pack shown in FIG. 2 to FIG. 4 may also be provided with the bottom plate 11 shown in FIG. 1, the disclosure is not limited thereto.

In an embodiment, the first battery 30 is a quadrangular prism battery, and the second battery 40 is a quadrangular prism battery, so that the internal space of the battery box 10 may be utilized to the maximum extent to meet the energy capacity. The first battery 30 is a quadrangular prism battery, and the second battery 40 is a quadrangular prism battery, that is, the first battery 30 and the second battery 40 may be square batteries.

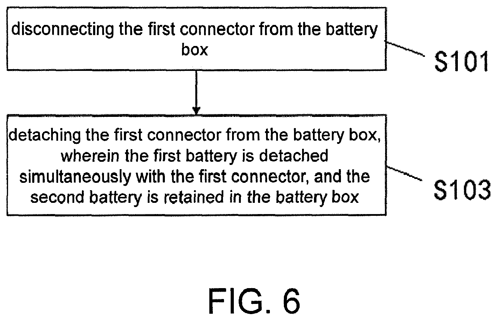

An embodiment of the present disclosure further provides a method for disassembling a battery pack. Please refer to FIG. 6, the disassembling method for a battery pack includes the following steps.
Step S101, disconnecting the first connector 20 from the battery box 10;
Step S103, detaching the first connector 20 from the battery box 10, wherein the first battery 30 is detached simultaneously with the first connector 20, and the second battery 40 is retained in the battery box 10.

In the method for disassembling the battery pack in an embodiment of the present disclosure, by disconnecting the first connector 20 from the battery box 10, the first battery 30 may be simultaneously detached from the battery box 10 along with the first connector 20 without affecting the second battery 40, so as to facilitate the maintenance of the battery pack, improve the maintenance efficiency of the battery pack, and save maintenance costs.

In an embodiment, the step of disconnecting the first connector 20 from the battery box 10 includes: disconnecting the first connector 20 and the frame 12, that is, the first connector 20 and the frame 12 are detachably connected in a normal state. During maintenance of the first battery 30, the connection relationship between the first connector 20 and the frame 12 needs to be released, so that the first connector 20 may be detached from the frame 12, thereby realizing the independent detachment of the first battery 30.

In some embodiments, the bolts connecting the first connector 20 and the frame 12 are detached, thereby releasing the connection between the first connector 20 and the frame 12.

In an embodiment, the step of disconnecting the first connector 20 and the battery box 10 further includes: before disconnecting the first connector 20 from the frame 12, the connection between the bottom plate 11 and the frame 12 is disconnected, so that the first connector 20 may be exposed. Accordingly, the connection between the first connector 20 and the frame 12 may be released subsequently.

In some embodiments, the bolts connecting the bottom plate 11 and the frame 12 are removed, thereby disconnecting the first connector 20 from the frame 12.

In an embodiment, the step of disconnecting the first connector 20 from the battery box 10 further includes: disconnecting the top cover 13 and the first battery 30, so that the first connector 20 may carry the first battery 30 to detach from the battery box 10.

In some embodiments, the connecting component 60 connecting the top cover 13 and the first battery 30 is removed. Specifically, the nut may be removed from the bolt, so that the connection between the connecting component 60 and the top cover 13 is released. In this manner, at least a part of the connecting component 60 may be detached from the battery box 10 along with the first battery 30.

In an embodiment, the first connector 20 is detached from the bottom portion of the frame 12, so that the first battery 30 is detached through the bottom portion of the frame 12, that is, when the first battery 30 is removed, the first battery 30 may be pulled out from the bottom of the frame 12. Under the circumstances, the top cover 13 may not be disassembled, thereby reducing disassembly steps.

In some embodiments, the bolts connecting the bottom plate 11 and the frame 12 are removed, the bottom plate 11 is removed, and then the bolts connecting the first connector 20 and the frame 12 are removed. The removal of the connecting component 60 connecting the top cover 13 and the first battery 30 may be prior to the above two steps, or may be performed after the above two steps, or may be performed before the above two steps, the disclosure is not limited thereto. After the bolts of the first connector 20 and the frame 12 are removed, the first connector 20 may be detached from the bottom portion of the frame 12.

In an embodiment, the method for disassembling a battery pack further includes: disconnecting the second connector 50 and the battery box 10, and detaching the second connector 50 from the battery box 10, wherein the second battery 40 is simultaneously detached from the battery box 10 along with the second connector 50. The first battery 30 and the second battery 40 may be independent detached through the first connector 20 and the second connector 50, so that the battery in the battery pack may be directly maintained in a targeted manner, thereby improving the maintenance efficiency. The disassembly process of the second connector 50 is not repeated here, and reference may be made to the disassembly process of the first connector 20 described above.

In an embodiment, the method for disassembling the battery pack is applicable to the above-mentioned battery pack.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery pack, comprising:
a battery box (10);
a first connector (20), which is detachably disposed in the battery box (10);
a first battery (30), which is fixed on the first connector (20) to be arranged in the battery box (10) through the first connector (20);
a second battery (40), which is arranged in the battery box (10), wherein the first connector (20) is not fixedly connected to the second battery (40) to prevent the second battery (40) from blocking the first battery (30) and the first connector (20) from being simultaneously removed from the battery box (10).

2. The battery pack according to claim 1, wherein the first battery (30) is adhesively connected to the first connector (20).

3. The battery pack according to claim 1, wherein the first battery (30) is provided in plurality, and the plurality of first batteries (30) are all fixed on the first connector (20).

4. The battery pack according to claim 1, further comprising a second connector (50), wherein the second connector (50) is detachably arranged in the battery box (10), the second battery (40) is fixed on the second connector (50) to be arranged in the battery box (10) through the second connector (50);
wherein the first battery (30) is not fixedly connected to the second connector (50), so as to prevent the first battery (30) from blocking the second battery (40) and the second connector (50) from being simultaneously removed from the battery box (10).

5. The battery pack according to claim 4, wherein the second battery (40) is adhesively connected to the second connector (50).

6. The battery pack according to claim 4, wherein the second battery (40) is provided in plurality, and the plurality of second batteries (40) are all fixed on the second connector (50).

7. The battery pack according to claim 4, wherein the first connector (20) and the second connector (50) are arranged at intervals.

8. The battery pack according to any one of claims 1-7, wherein the battery box (10) comprises:
a bottom plate (11);
a frame (12), which is arranged around the bottom plate (11);
wherein the first connector (20) is arranged in the frame (12), and the bottom plate (11) is detachably connected to the first connector (20), and/or the frame (12) is detachably connected to the first connector (20).

9. The battery pack according to claim 8, wherein the frame (12) is detachably connected to the bottom plate (11), and the frame (12) is detachably connected to the first connector (20).

10. The battery pack according to claim 8, wherein the first connector (20) is located between the frame (12) and the bottom plate (11), such that after the bottom plate (11) is separated from the frame (12), the first connector (20) is detachable from the frame (12).

11. The battery pack according to claim 8, wherein the battery box (10) further comprises a top cover (13), the top cover (13) is arranged on the frame (12), and the top cover (13) is detachably connected to the first battery (30).

12. The battery pack according to claim 11, further comprising a connecting component (60), and the top cover (13) is connected to the first battery (30) through the connecting component (60).

13. The battery pack according to claim 12, wherein the top cover (13) is detachably connected to at least a part of the connecting component (60), and the first battery (30) is fixedly connected to at least a part of the connecting component (60).

14. The battery pack according to claim 13, wherein the connecting component (60) is adhesively connected to the first battery (30).

15. The battery pack according to claim 14, wherein the connecting component (60) comprises:
a fixing member (61), which is detachably connected to the top cover (13);
a reinforcing member (62), which is connected to one end of the fixing member (61) facing the first battery (30), wherein the reinforcing member (62) is adhesively connected to the first battery (30).

16. The battery pack according to claim 8, wherein the battery box (10) further comprises a partition beam (14), the partition beam (14) is arranged in the frame (12), and the first battery (30) and the second battery (40) are located on both sides of the partition beam (14) respectively.

17. The battery pack according to claim 16, wherein the first connector (20) is located between the partition beam (14) and the bottom plate (11), such that after the bottom plate (11) is separated from the frame (12), the first connector (20) is detachable from the frame (12).

18. The battery pack according to claim 1, further comprising a second connector (50), the second battery (40) is disposed on the second connector (50), the battery box (10) comprises a frame (12) and a top cover (13), the first connector (20) is connected to a bottom portion of the frame (12), the second connector (50) is connected to the bottom portion of the frame (12), and the top cover (13) is arranged on the frame (12).

19. The battery pack according to claim 18, wherein the battery box (10) further comprises a partition beam (14), the partition beam (14) is arranged in the frame (12), the first battery (30) and the second battery (40) are arranged respectively on both sides of the partition beam (14);
wherein the first connector (20) and the second connector (50) are connected to a bottom portion of the partition beam (14).

20. A method for disassembling a battery pack, the method comprising:
disconnecting a first connector (20) from a battery box (10);
detaching the first connector (20) from the battery box (10), wherein a first battery (30) is detached simultaneously with the first connector (20), and a second battery (40) is retained in the battery box (10).

21. The method for disassembling the battery pack according to claim 20, wherein the step of disconnecting the first connector (20) from the battery box (10) comprises:
disconnecting the first connector (20) from a frame (12).

22. The method for disassembling the battery pack according to claim 21, wherein the step of disconnecting the first connector (20) from the battery box (10) further comprises: disconnecting a bottom plate (11) from the frame (12) before the first connector (20) is disconnected from the frame (12).

23. The method for disassembling the battery pack according to claim 21 or 22, wherein the step of disconnecting the first connector (20) from the battery box (10) further comprises:
disconnecting a top cover (.13) from the first battery (30).

24. The method for disassembling the battery pack according to claim 23, wherein the first connector (20) is detached from a bottom portion of the frame (12), such that the first battery (30) is removed via the bottom portion of the frame (12).

25. The method for disassembling the battery pack according to claim 20, further comprising:
disconnecting a second connector (50) from the battery box (10);
detaching the second connector (50) from the battery box (10), wherein the second battery (40) is simultaneously detached with the second connector (50).
